(19) Europäisches Patentamt / European Patent Office / Office européen des brevets

(11) **EP 2 058 970 A1**

(12) **EUROPEAN PATENT APPLICATION**

(43) Date of publication:
**13.05.2009 Bulletin 2009/20**

(51) Int Cl.:
**H04L 1/18** (2006.01)

(21) Application number: **07301524.0**

(22) Date of filing: **06.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **THOMSON LICENSING**
**92100 Boulogne-Billancourt (FR)**

(72) Inventors:
• **Zhang, Huan Qiang**
  **Beijing 100085 (CN)**

• **Chen, Ren Lei**
  **Beijing 100085 (CN)**
• **Zhou, Guang Hua**
  **Beijing 100081 (CN)**
• **Ma, Xiao Jun**
  **Beijing 100085 (CN)**

(74) Representative: **Ruellan-Lemonnier, Brigitte**
**Thomson multimedia**
**Patent Department**
**46 Quai A. Le Gallo**
**92648 Boulogne Cedex (FR)**

(54) **Method, apparatus and system for multicast data rate adaptation**

(57) A method for multicast data rate adaptation for sending data packet by a transmitter includes applying a multicast data rate for sending data packets as a function of packet loss information derived from ARQ requests, the method can be used to adapt multicast data rate without modifying the MAC layer protocol of receiver.

Fig. 1

**Description**

**Technical Field**

The present invention relates to wireless communication, and more particularly, relates to multicast data rate adaptation.

**Background**

Data rate adaptation mechanisms are not standardized in IEEE 802.11 WLAN (Wireless LAN), and each manufacturer has its own implementation on data rate adaptation for unicast packets. Few multicast data rate adaptations are implemented for multicast packets. Most commercial APs (Access Point) use a fixed transmission rate for multicast packets.

Grilo Grilo, Mario Nunes, "Link-adaptation and Transmit Power Control for Unicast and Multicast in IEEE 802.11a/h/e WLANs," lcn, p. 334, 28th Annual IEEE International Conference on Local Computer Networks (LCN'03), 2003, proposes a mechanism to combine link adaptation and transmit power control (TPC) in IEEE 802.11a WLANs. The link-adaptation and TPC algorithms try to maximize the throughput of the WLAN while minimizing transmission power. The algorithm that runs at the sender allows a prediction of the channel status. The feedback from the receiver notifies the sender of the Signal-to-Interference-plus-Noise-Ratio experienced in previous transmissions. An extension of the algorithm for multicast is also presented.

Youngsam Park, Yongho Seok, Nakjung Choi, Yanghee Choi and Jean-Marie BONNIN, "Rate-Adaptive Multimedia Multicasting over IEEE 802.11 Wireless LANs," IEEE CCNC 2006 Special Sessions, Multimedia and QoS in Wireless Networks, Las Vegas, USA, Jan, 2006 introduces a data rate adaptation mechanism named SARM (SNR based auto rate for multicast) for multicasting multimedia content in IEEE 802.11 WLAN environments. Since there is no RTS/CTS or MAC ACK packet in multicast packet transmissions, SARM uses an auxiliary signaling method to obtain the channel quality for each mobile node, and then it adapts a transmission rate based on the SNR of the node experiencing the worst air-channel.

Disadvantages of both aforementioned technologies are as follows: firstly, modification of the clients' MAC protocol is needed, but in most cases, the MAC protocol in existing wireless cards is not allowed to be modified; secondly, feedback packets may cause overflow problem because not only there is no mechanism to suppress the feedback packets but also clients need to send feedback packets during each beacon interval.

**SUMMARY**

According to a general aspect of present invention, a method for multicast data rate adaptation for sending packet data by a transmitter is proposed, the transmitter applies a multicast data rate as a function of packet loss information derived from ARQ requests.

According to another general aspect of present invention, an apparatus for multicast data rate adaptation comprises a multicast data rate adaptation module. The multicast data rate adaptation module is configured to apply a multicast data rate as a function of packet loss information, wherein the packet loss information is derived from ARQ requests.

According to another general aspect of present invention, a system for multicast data rate adaptation comprises a transmitter and at least one receiver, the receiver is configured to send ARQ requests to the transmitter; the transmitter is configured to receive the ARQ requests, derive packet loss information from the ARQ requests, apply a multicast data rate as a function of the packet loss information.

According to an aspect of present invention, multicast data rate can be adapted without modifying MAC layer protocol of receiver. Other features and advantages of the present invention will become apparent from the following detailed description of the invention made with reference to the accompanying drawings.

It is to be understood that both the foregoing general description and the following detailed description of the present invention are explanatory and exemplary only.

**BRIEF DESCRIPTION OF THE DRAWINGS**

The accompanying drawings, which are included to provide a further understanding of the invention and are incorporated in and constitute a part of this application, illustrate embodiment(s) of the invention together with the description which serves to explain the principle of the invention. Therefore, the invention is not limited to the embodiments. In the drawings:

Fig. 1 is a flowchart of a general method carried out by a transmitter in accordance with the present embodiment.

Fig. 2 illustrates the block diagram for a transmitter in accordance with the embodiment.

Fig. 3 is a flowchart of a first embodiment of a detailed method carried out by a transmitter in accordance with the principle of embodiment.

Fig. 4 is a flowchart of a second embodiment of a detailed method carried out by a transmitter in accordance with the principle of embodiment.

## DETAILED DESCRIPTION

In order to better understand the present embodiment, packet loss recovery mechanisms are briefly introduced. It should be noted that the introduction is used for the purpose of better understanding of the embodiment and shouldn't be used to limit the invention. Due to noise, interference, channel fading and other factors, a wireless network (e.g. WLAN) intrinsically exhibits high packet loss rate compared with a wired network. FEC (Forward Error Correction), ARQ (Automatic Repeat Request) and hybrid FEC/ARQ are used for retransmission for multicast packets.

In FEC schemes, extra redundancy packets are generated and delivered together with the original media packets. Once there are lost media packets, the receiver can recover these lost media packets from the redundancy packets.

In ARQ schemes, retransmission requests, also called ARQ requests, are made by the receiver based on ACK / NAK method coupled with timeout mechanism, so as to achieve reliable data transmission. An ACK (acknowledgment) is a message sent by the receiver to the transmitter to indicate that it has correctly received a data packet. Usually, when the transmitter does not receive the ACK before the timeout occurs (i.e. within a reasonable amount of time after sending the data packet), it retransmits the packet until it is either correctly received or the error persists beyond a predetermined number of retransmissions. An NAK (negative-acknowledgment) is a message sent by the receiver to the transmitter to indicate which data packet was lost. If the NAK method is used, the transmitter never retransmits a packet until it receives the NAK from the receiver requesting the packet retransmission.

In hybrid FEC/ARQ schemes, the FEC encoder transmits some FEC packets (otherwise called pre-sending FEC packets) together with the original media packets to the receiver. If the pre-sending FEC packets are not sufficient for recovering the missing packets, an ARQ request will be generated by the client and sent to the ARQ server. The ARQ server transmits extra FEC packets or missing packets to the client as requested by ARQ message.

In the following descriptions, the terms "transmitter" and "receiver" will be used for the convenience of illustration. It should be noted that the terms are for the purpose of convenient description and should not be used to limit the invention. Furthermore, the "transmitter" includes but not limited to an apparatus or a module that is at least capable of sending multicast packets, receiving ARQ request; the "receiver" includes but not limited to an apparatus or a module that is at least capable of sending ARQ request.

The embodiment provides a method for multicast data rate adaptation for sending data packet in a transmitter, a multicast data rate is applied as a function of packet loss information derived from ARQ requests sent by receivers in application layer containing schemes of ARQ or hybrid FEC/ARQ.

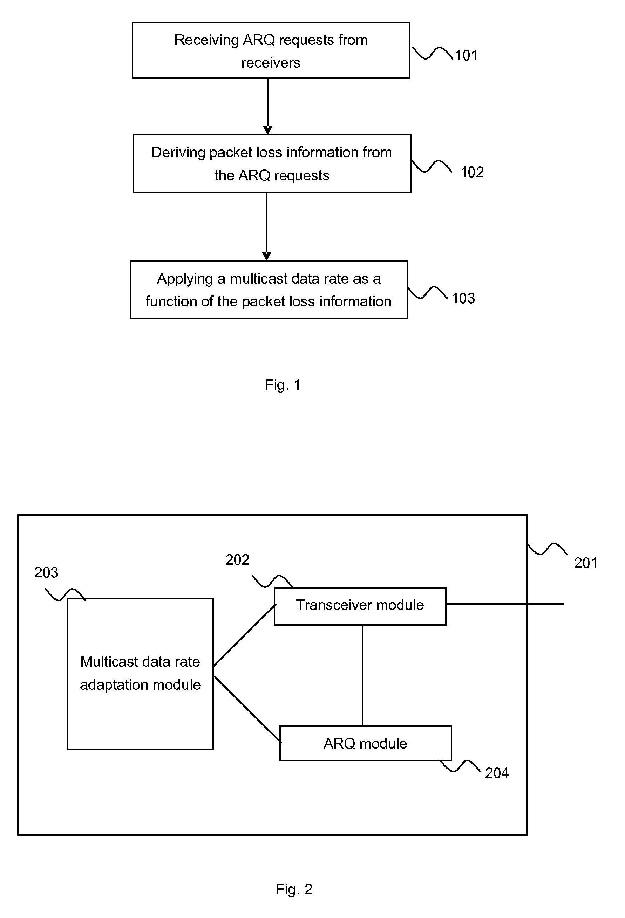

As can be seen from Fig. 1, in step 101, the transmitter receives ARQ requests from receivers; in step 102, the transmitter derives packet loss information from the ARQ requests; in step 103, the transmitter applies a multicast data rate as a function of the packet loss information. Note that the ARQ requests may be transmitted through the same multicast group where the media packets are transmitted, or in another multicast group that is associated with the multicast group where the media packets are transmitted. By using abovementioned method, it is not necessary to modify the MAC layer protocol of the receiver by taking advantage of application-layer information (e.g., ARQ request) to measure channel condition; furthermore, it reduces the feedback overflow problem ( e.g., amount of feedback packets of ARQ requests from the receivers) in multicast environments because not only does the embodiment take advantage of the ARQ mechanism to suppress feedback packets but also the feedback frequency (or the interval between two adjacent feedback packets) is determined by application-layer FEC/ARQ block size, which usually is in the time scale of seconds. In addition, to achieve better feedback suppression, the time of sending an ARQ request is determined by the packet loss rate. The receiver that loses more packets sends the ARQ request earlier. A receiver should suppress its ARQ request once it receives ARQ requests from other receiver, which requests more extra redundancy packets.

There are many means to change the data rate. Take 802.11 for an example, the following lists the selectable data rates for different 802.11 standards, i.e. the 802.11a contains 6 Mbps(OFDM, Orthogonal Frequency Division Multiplexing), 9 Mbps(OFDM), 12 Mbps(OFDM), 18 Mbps(OFDM), 24 Mbps(OFDM), 36 Mbps(OFDM), 48 Mbps(OFDM), 54 Mbps(OFDM); the 802.11b contains 1 Mbps (DSSS, Direct Sequence Spread Spectrum), 2 Mbps(DSSS), 5.5 Mbps (DSSS), 11 Mbps(DSSS); the 802.11j contains 6 Mbps(OFDM), 9 Mbps(OFDM), 12 Mbps(OFDM), 18 Mbps(OFDM), 24 Mbps(OFDM), 36 Mbps(OFDM), 48 Mbps(OFDM), 54 Mbps(OFDM), 1 Mbps (DSSS), 2 Mbps(DSSS), 5.5 Mbps (DSSS), 11 Mbps(DSSS), 22 Mbps(DSSS), 33 Mbps(DSSS) and so on. Parameters can be used to change the data rate, the means includes but not limited to tune off some subcarriers; uses different modulation formats of which BPSK (Binary Phase Shift Keying), QPSK (Quadrature Phase Shift Keying), 16-QAM (Quadrature Amplitude Modulation) and 64-QAM are available for OFDM, and CCK (Complementary Code Keying) and PBCC (Packet Binary Convolutional Code) for DSSS; and etc.

Fig. 2 illustrates the block diagram for a transmitter (201). In order to concentrate on the aspects of the invention, only necessary modules and necessary functions of modules are described. The transmitter (201) comprises at least one transceiver module (202), a multicast data rate adaptation module (203) and an ARQ module (204). The transceiver module (202) is configured to receive ARQ requests from receivers and send multicast packets at a certain data rate; The ARQ module (204) is configured to derive the packet loss information from the ARQ requests; the multicast data rate adaptation module (203) is configured to apply a multicast data rate as a function of packet loss information derived from ARQ requests.

It can be seen that such a transmitter and at least one receiver can be used to make up a system. In such a system, the receiver is capable of sending ARQ requests to the transmitter; the transmitter is capable of receiving the ARQ requests, deriving packet loss information from the ARQ requests, applying a multicast data rate as a function of the packet loss information.

Video streaming in the WLAN according to the present embodiment will be now described below.

Two categories of embodiments in accordance with the principle of the invention are described below: one is CURA (channel-usage-based rate adaptation), and the other is CGRA (coarser granularity rate adaptation). It can be seen below that the main idea of CURA and CGRA is to apply a multicast data rate, which is sometimes also called transmission rate, as a function of packet loss information that is derived from ARQ requests.

It should be noted AP (access point) and client refer to transmitter and receiver respectively for illustration in the environment of WLAN below.

CURA is described in the environment of hybrid FEC/ARQ and multicast video streams in a WLAN. CURA is used to apply a multicast data rate for which transmission is most efficient. There're many ways to select the multicast data rate for which the transmission is most efficient. For example, a certain parameter representative of the efficiency of the transmission for a certain multicast data rate can be calculated. And after obtaining all parameters for the whole possible transmission data rates, the parameters can be used to select the multicast transmission data rate for which the transmission is most efficient. One example of the most efficient transmission is a transmission data rate at which the media packets together with the FEC packets provide the lowest channel usage. The channel usage can be evaluated by the channel usage per effective bit (called the unified channel usage), i.e. how long the channel is used to successfully transmit one bit of media data to the client. Supposing the unified channel usage is calculated during a time period T (In order to get more accurate result, T should be larger than FEC block size), and the current packet transmission rate at AP is R bits/s. $N_{fec}$ and $N_{media}$ refer to the number of FEC and media bits transmitted during the T respectively. Then unified channel usage U during the T can be calculated as below:

$$U = ( (N_{fec} + N_{media} ) / R ) / N_{media} \qquad (1)$$

$N_{fec}$ can be calculated from the average packet loss rate L. The number of transmitted media packets $P_{media}$ can be calculated as below:

$$N_{fec} = ( (P_{media} * L) * (1 + L) ) * S_{fec} \qquad (2)$$

Here $S_{fec}$ is the size of the FEC packets, and it usually is a configurable constant. Therefore, for each transmission rate R, the unified channel usage U can be calculated as below:

$$U = f(R, P_{media}, L) = ( ( ( ( (P_{media} * L) * (1 + L) ) * S_{fec} ) + N_{media} ) / R ) / N_{media} \qquad (3)$$

The average packet loss rate L mentioned above is calculated based on packet loss information in ARQ requests from clients. The ARQ request carries packet loss information that comprises: 1) the number of extra FEC packets needed to recover current lost packets; 2) current packet loss rate $L_{cli}$. Supposing in the same interval T the number of transmitted media packets is $P_{tran}$, and $P_{lost}$ of them are lost in the transmission at a client side, therefore the client can get the packet loss rate $L_{cli} = P_{lost} / Ptran$. The average packet loss rate L can be the average of packet loss rates from all clients.

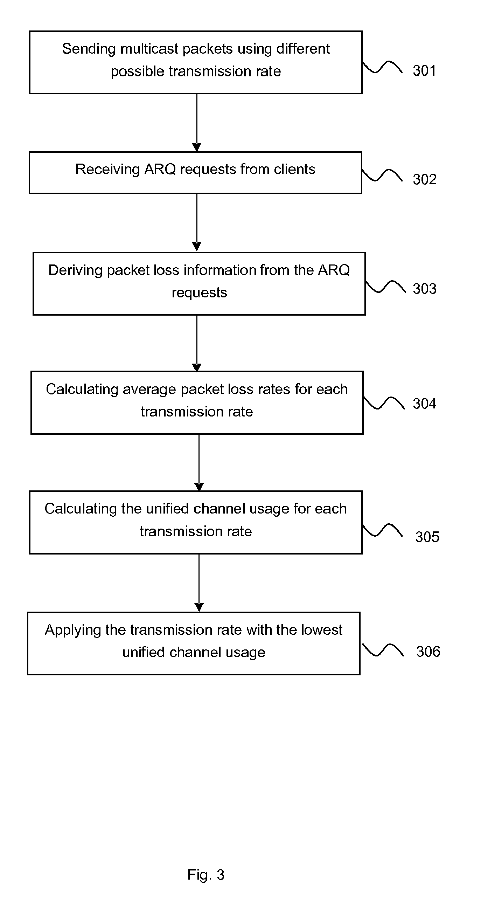

An embodiment as can be seen from Fig. 3 of CURA includes, in step 301, the AP sends multicast packets using different possible transmission rates; in step 302, the AP receives ARQ requests from clients; in step 303, the AP derives packet loss information from the ARQ requests; in step 304, the AP calculates the average packet loss rates L based on the packet loss information for each transmission rate; in step 305, the AP calculates the unified channel usage for each transmission rate; in step 306, the AP applies a transmission rate with the lowest unified channel usage. Furthermore, advantageously, the AP may adopt an intermediate transmission rate at the beginning (e.g., 18M for 802.11b/g, and 5.5M for 802.1b). Preferably, the AP sends multicast packets using different possible transmission rates periodically, such as every 10 seconds. It also can be seen that in step 301, the AP may use a subset of all possible transmission rates or some regular transmission rates instead of all possible transmission rates. According to the above embodiment, the multicast data rate adaptation module (203) further comprises a first calculation module and a first employment module. The first calculation module is configured to calculate a parameter representative of the efficiency of the transmission according to the packet loss information; the first employment module is configured to apply a transmission rate with the most efficient transmission according to parameters calculated by the first calculation module. One example of the most efficient transmission is a transmission data rate at which the media packets together with the FEC packets provide the lowest channel usage. With regard to this example of the lowest unified channel usage, the first calculation module is configured to calculate average packet loss rate based on the packet loss information and calculate unified channel usage based on the average packet loss rate; the first employment module is configured to apply a transmission rate with the lowest unified channel usage.

The method of the embodiment can also be applied to pure ARQ scheme where the packet loss information in the ARQ request comprises: 1) the sequence numbers of the lost packets which denote the missing packets; 2) current packet loss rate $L_{cii}$. The steps in pure ARQ schemes are almost the same as those in FEC/ARQ schemes. However, the formulas should be changed accordingly as follows:

$$U = ( ( N_{retr} + N_{media} ) / R ) / N_{media} \qquad (1')$$

$$N_{retr} = ( ( P_{media} * L ) * ( 1 + L ) ) * S \qquad (2')$$

$$U = f(R, P_{media}, L) = ( ( ( ( ( P_{media} * L ) * ( 1 + L ) ) * S ) + N_{media} ) / R ) / N_{media}$$
$$(3')$$

Wherein $N_{retr}$ denotes the number of retransmitted media bits used for missing packet recovery, and the S is the average packet size.

The advantages of CURA are as follows, firstly, it reduces the deployment cost without modifying the client's protocol; secondly, it suppresses the feedback overflow by using ARQ mechanism; thirdly, it provides a fine granularity transmission rate adaptation by calculating unified channel usages for all possible transmission rates.

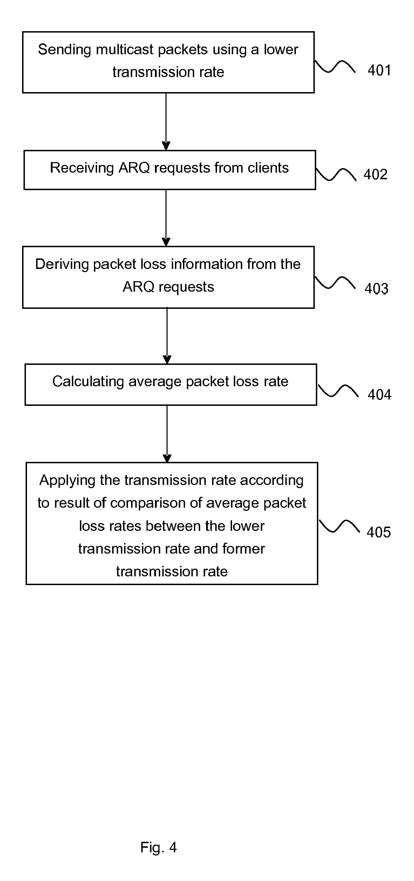

CGRA is a coarse transmission rate adaptation method. The gist of CGRA is to use a transmission rate with the lower packet loss rate by comparing the packet loss rate of newly changed transmission rate with the packet loss rate of former transmission rate. An embodiment as can be seen from Fig. 4 of CGRA includes, in step 401, the AP sends multicast packets using a lower transmission rate; in step 402, the AP receives ARQ requests from clients; in step 403, the AP derives packet loss information from the ARQ request; in step 404, the AP calculates average packet loss rate based on the packet loss information; in step 405, the AP applies a transmission rate according to the result of comparison of average packet loss rates between the lower transmission rate and former transmission rate. Advantageously, the AP adopts the highest transmission rate at the beginning. According to the above embodiment, the multicast data rate adaptation module (203) further comprises a second calculation module and a second employment module. The second calculation module is configured to calculate average packet loss rate based on the packet loss information; the second employment module is configured to apply the transmission rate according to the result of comparison of average packet loss rate between the current multicast data rate and the former multicast data rate, wherein the lower average packet loss rate prevails.

It should be noted that alternatives, variations and modifications within the scope of the invention are apparent to one of skill in the art by reading above description. For example, 1) the AP performs the step 401 to 405 periodically, such as every n seconds, and advantageously, complex rules can be added, such as, setting n=2*n if the packet loss rate of former transmission rate is lower than that of newly changed transmission rate, or setting n=n/2 if percentage of packet loss rate of the currently used transmission rate is larger than 40%; 2) The AP firstly adopts the lowest transmission rate and sends multicast packets using a higher transmission rate instead of a lower transmission rate in 401. Or otherwise, the AP uses other arithmetic to send the multicast packets in a transmission rate that is not adjacently higher or lower than the former transmission rate. Furthermore, the method can also be applied to pure ARQ scheme.

The advantages of deployment of CGRA are as follows, first, it reduces the deployment cost without modifying client's protocol; second, it suppresses the feedback explosion by using ARQ mechanism; third, it provides a quick and simple transmission rate adaptation, which consumes less system resources, by comparing packet loss rates between current transmission rate and former transmission rate.

It should be noted that the invention is described in the environment of WLAN. However, by reading the description, the principle of the invention could be apparent to a person skilled in the art to which the invention pertains to apply to the environment that adopts ARQ-based packet mechanism or similar mechanism.

It also should be noted that the invention includes a storage media which has the following instructions: instructions of receiving ARQ requests from receivers; instructions of deriving packet loss information from the ARQ requests; instructions of applying a multicast data rate as a function of packet loss information. The variants, modifications should be apparent to those skilled in the art through reading the above method, apparatus and system.

The implementations described herein may be implemented in, for example, a method or process, an apparatus, or a software program. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processing devices also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data transmission and reception. Examples of equipment include set-top boxes, laptops, personal computers, and other communication devices. As should be clear, the equipment may be mobile and even installed in a mobile vehicle.

Additionally, the methods may be implemented by instructions being performed by a processor, and such instructions may be stored on a processor-readable medium such as, for example, an integrated circuit, a software carrier or other storage device such as, for example, a hard disk, a compact diskette, a random access memory ("RAM"), or a read-only memory ("ROM"). The instructions may form an application program tangibly embodied on a processor-readable medium. As should be clear, a processor may include a processor-readable medium having, for example, instructions for carrying out a process.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the invention.

**Claims**

1. A method for multicast data rate adaptation for sending data packets by a transmitter, **characterized by** the step of applying (103) a multicast data rate for sending data packets as a function of packet loss information derived from ARQ requests.

2. The method of claim 1, **characterized in that** it further comprises before the step of applying (103),
   the step of receiving (101) ARQ requests from at least one receiver;
   the step of deriving (102) the packet loss information from the ARQ requests.

3. The method of claim 2, **characterized in that** it further comprises the steps of:

   applying at least two distinct multicast data rates consecutively;
   determining a parameter representative of the efficiency of the transmission for each multicast data rate;
   selecting for transmission the multicast data rate among the at least two multicast data rates for which transmission is most efficient.

4. The method of claim 3, **characterized in that** the step of determining comprises:

the step of calculating average packet loss rate for each multicast data rate;
the step of calculating the parameter representing unified channel usage for each multicast data rate;
wherein the most efficient channel usage is represented by the lowest unified channel usage.

5. The method of claim 2, **characterized in that** the step of applying (103) comprises:

the step of determining an average packet loss rate for a current multicast data rate;
the step of applying a second multicast data rate;
the step of determining an average packet loss rate for the second multicast data rate;
the step of applying the multicast data rate among the current multicast data rate and the second multicast data rate corresponding to the lowest average packet loss.

6. An apparatus for multicast data rate adaptation, **characterized in that** it comprises,
a multicast data rate adaptation module (203) configured to apply a multicast data rate as a function of packet loss information;
wherein the packet loss information is derived from ARQ requests.

7. An apparatus of claim 6, **characterized in that** it further comprises,
a transceiver module (202) configured to send and receive data packets;
an ARQ module (204) configured to derive packet loss information from the ARQ requests;
wherein the ARQ requests are received by the transceiver module (202).

8. An apparatus of claim 7, **characterized in that** the multicast data rate adaptation module (203) comprises,
a first calculation module configured to calculate a parameter representative of the efficiency of the transmission according to the packet loss information;
a first employment module configured to apply multicast data rate with the most efficient transmission according to parameters calculated by the first calculation module.

9. An apparatus of claim 7, **characterized in that** the multicast data rate adaptation module (203) comprises,
a second calculation module configured to calculate average packet loss rate based on the packet loss information;
a second employment module configured to apply the transmission rate according to the result of comparison of average packet loss rate between the current multicast data rate and the former multicast data rate, wherein the lower average packet loss rate prevails.

10. A storage media for multicast data rate adaptation for sending data packet, **characterized in that** it comprises:

instructions of receiving ARQ requests from receivers;
instructions of deriving packet loss information from the ARQ requests;
instructions of applying a multicast data rate as a function of the packet loss information.

Receiving ARQ requests from receivers ⌇101

Deriving packet loss information from the ARQ requests ⌇102

Applying a multicast data rate as a function of the packet loss information ⌇103

Fig. 1

Multicast data rate adaptation module 203

Transceiver module 202

ARQ module 204

201

Fig. 2

```
┌─────────────────────────────────────────┐
│   Sending multicast packets using        │
│   different possible transmission rate    │  ⟍ 301
└─────────────────────────────────────────┘
                    │
                    ▼
┌─────────────────────────────────────────┐
│   Receiving ARQ requests from clients     │  ⟍ 302
└─────────────────────────────────────────┘
                    │
                    ▼
┌─────────────────────────────────────────┐
│   Deriving packet loss information        │
│   from the ARQ requests                   │  ⟍ 303
└─────────────────────────────────────────┘
                    │
                    ▼
┌─────────────────────────────────────────┐
│   Calculating average packet loss rates   │
│   for each transmission rate              │  ⟍ 304
└─────────────────────────────────────────┘
                    │
                    ▼
┌─────────────────────────────────────────┐
│   Calculating the unified channel usage   │
│   for each transmission rate              │  ⟍ 305
└─────────────────────────────────────────┘
                    │
                    ▼
┌─────────────────────────────────────────┐
│   Applying the transmission rate with     │
│   the lowest unified channel usage        │  ⟍ 306
└─────────────────────────────────────────┘
```

Fig. 3

Sending multicast packets using a lower transmission rate — 401

Receiving ARQ requests from clients — 402

Deriving packet loss information from the ARQ requests — 403

Calculating average packet loss rate — 404

Applying the transmission rate according to result of comparison of average packet loss rates between the lower transmission rate and former transmission rate — 405

Fig. 4

**European Patent Office**

**EUROPEAN SEARCH REPORT**

Application Number

EP 07 30 1524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 526 022 B1 (CHIU DAH MING [US] ET AL) 25 February 2003 (2003-02-25)<br>* column 1, lines 48-50 *<br>* column 3, line 57 - column 4, line 7 *<br>* column 5, lines 12-25 *<br>* column 8, lines 28-64 *<br>* column 10, line 57 - column 15, line 45 * | 1-10 | INV.<br>H04L1/18 |
| X | US 2004/156315 A1 (WALLS JEFFREY JOEL [US] ET AL) 12 August 2004 (2004-08-12)<br>* paragraphs [0020], [0032] - [0036], [0038], [0039] * | 1,6,10 | |
| A | | 2-5,7-9 | |
| X | EP 1 450 535 A (MATSUSHITA ELECTRIC IND CO LTD [JP]) 25 August 2004 (2004-08-25)<br>* abstract *<br>* paragraphs [0010], [0017], [0018], [0022] - [0026], [0030] - [0032], [0038], [0057], [0058] * | 1,6,10 | |
| | | | TECHNICAL FIELDS SEARCHED (IPC) |
| A | | 2-5,7-9 | H04L |
| A | WO 2006/094426 A (INTEL CORP [US]; WANG ZHI [CN]; JIAN RUI [CN]; DENG YING AN; SUN YUANH) 14 September 2006 (2006-09-14)<br>* paragraphs [0007], [0010], [0023] * | 1-10 | |

The present search report has been drawn up for all claims

| Place of search | Date of completion of the search | Examiner |
|---|---|---|
| The Hague | 27 June 2008 | Miclea, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 30 1524

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2008

| Patent document cited in search report | | Publication date | Patent family member(s) | | Publication date |
|---|---|---|---|---|---|
| US 6526022 | B1 | 25-02-2003 | NONE | | |
| US 2004156315 | A1 | 12-08-2004 | NONE | | |
| EP 1450535 | A | 25-08-2004 | NONE | | |
| WO 2006094426 | A | 14-09-2006 | CN | 101138216 A | 05-03-2008 |
| | | | EP | 1859594 A1 | 28-11-2007 |
| | | | GB | 2439010 A | 12-12-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRILO GRILO ; MARIO NUNES.** Link-adaptation and Transmit Power Control for Unicast and Multicast in IEEE 802.11a/h/e WLANs. *28th Annual IEEE International Conference on Local Computer Networks (LCN'03),* 2003, vol. lcn, 334

- **YOUNGSAM PARK ; YONGHO SEOK ; NAKJUNG CHOI ; YANGHEE CHOI ; JEAN-MARIE BONNIN.** Rate-Adaptive Multimedia Multicasting over IEEE 802.11 Wireless LANs. *IEEE CCNC 2006 Special Sessions, Multimedia and QoS in Wireless Networks,* January 2006